# DEMANDE DE BREVET EUROPEEN

(11) **EP 2 428 691 A1**
(43) Date de publication de la demande: **14.03.2012**
(21) Numéro de dépôt: 11354043.9
(22) Date de dépôt: 02.09.2011
(51) Int. Cl.: F16B 37/06

(54) **Insert monobloc borgne à tronçon de dégagement de taraud déformable et procédé de fabrication et de déformation de l'insert**

(30) Priorité: 08.09.2010 FR 1003582
(71) Demandeur: Bollhoff Otalu S.A., 73490 La Ravoire (FR)
(72) Inventeur: Faguer, Sylvain, 73800 Montmelian (FR)
(74) Mandataire: Gris, Sébastien

(57) **Abrégé**

L'insert monobloc comprend un fût borgne (2), une collerette (3) délimitant une tête de l'insert au niveau d'une extrémité axiale ouverte du fût (2), et un tronçon fileté (4) intérieurement au fût par taraudage. Il comporte en outre entre le tronçon fileté (4) et le fond du fût (2) un tronçon de dégagement de taraud (5) comportant une zone fusible configurée pour se déformer sous un effort axial prédéterminé de compression appliqué à l'insert sans provoquer de déformation dudit tronçon axial fileté (4).

## Description

### Domaine technique de l'invention

L'invention est relative à un insert monobloc comprenant:
- un fût borgne,
- une collerette délimitant une tête de l'insert au niveau d'une extrémité axiale ouverte du fût,
- un tronçon fileté intérieurement au fût par taraudage,
- un tronçon de dégagement de taraud agencé entre le tronçon fileté et le fond du fût.

### État de la technique

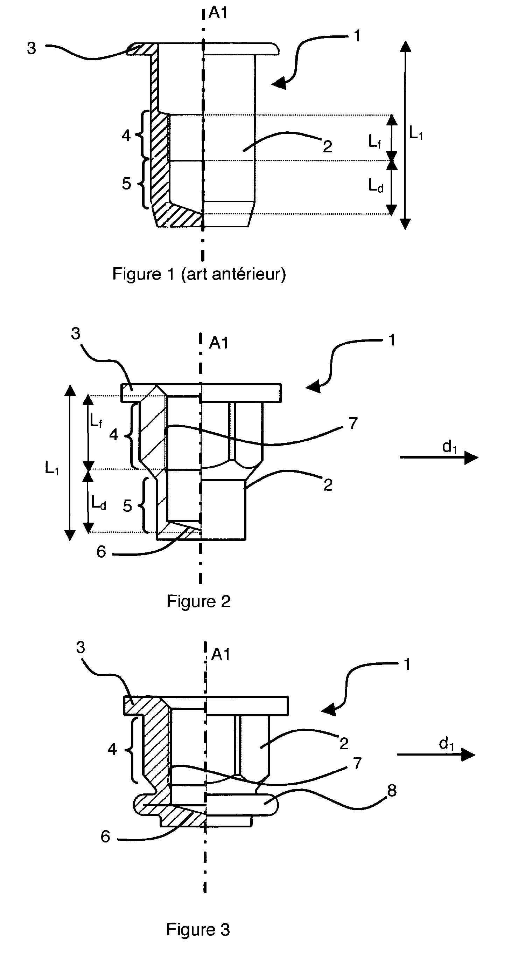

Comme illustré à la figure 1, un insert 1, de préférence utilisé pour le surmoulage, comporte de manière générale un fût borgne 2 et une collerette 3 délimitant une tête de l'insert plus ou moins prononcée au niveau d'une extrémité axiale ouverte du fût 2. Un tronçon axial du fût borgne 2 est fileté intérieurement au fût 2 par taraudage. Le taraudage du fût 2 génère intérieurement au fût 2 un tronçon fileté 4, et un tronçon de dégagement de taraud 5 nécessaire pour réaliser le taraudage et former le filetage.

Le tronçon de dégagement de taraud 5 a un dégagement proportionnel aux dimensions du taraudage. Ainsi, la longueur L₁ de l'insert selon sa direction axiale A1 n'est donc pas optimisée du fait d'une longueur superflue de l'insert induite par le tronçon de dégagement de taraud 5, et dont la présence n'est due que pour réaliser le filetage. De plus, en fonction du diamètre à tarauder, le tronçon de dégagement de taraud 5 peut avoir une longueur L_{d} supérieure à la longueur L_{f} du tronçon fileté selon l'axe A1, augmentant ainsi encore la longueur de l'insert.

Pour réduire la longueur de l'insert, il est possible de rendre le fût 2 débouchant, et de lui donner la longueur maximale désirée, puis de le tarauder avant de rajouter un bouchon sur l'ouverture du fût 2 opposée à la collerette 3. Cependant, l'étape d'obturation engendre un surplus de matière, un risque de dégradation de l'étanchéité, et un surcoût lors de la fabrication.

### Objet de l'invention

L'objet de l'invention consiste à réaliser un insert compact et facile à fabriquer tout en conservant l'étanchéité en partie arrière de l'insert.

On tend vers cet objet en ce que le tronçon de dégagement de taraud comporte une zone fusible configurée pour se déformer sous un effort axial prédéterminé de compression appliqué à l'insert sans provoquer de déformation dudit tronçon fileté.

Une telle zone fusible a pour effet de permettre un raccourcissement de la longueur axiale de l'insert par déformation.

Selon un développement, le tronçon de dégagement de taraud présente un profil conique non-débouchant au niveau du fond du fût.

Selon un autre développement, l'épaisseur du fût est plus faible au niveau de la zone fusible du tronçon de dégagement de taraud qu'au niveau du tronçon fileté.

Selon une variante, la longueur axiale du tronçon fileté est inférieure ou égale à la longueur axiale du tronçon de dégagement de taraud.

Selon un développement, l'insert comporte des moyens pour bloquer sa rotation autour d'un axe longitudinal du fût après surmoulage. Les moyens pour bloquer la rotation après surmoulage peuvent être formés par la surface extérieure du fût, sur au moins une partie de la longueur axiale dudit fût. La surface extérieure du fût au niveau des moyens de blocage en rotation peut être délimitée par un cylindre dont une courbe directrice présente une forme polygonale.

L'invention est aussi relative à un procédé de fabrication et de déformation d'un insert comportant, après formation du fût borgne et de la collerette, une étape de taraudage du fût de l'insert par un taraud, suivie d'une étape d'emboutissage de l'insert sur son extrémité opposée à la collerette lors du retrait du taraud de sorte à former un bourrelet en saillie de la surface extérieure du fût au niveau du tronçon de dégagement de taraud.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 illustre un insert taraudé en semi-coupe longitudinale selon l'art antérieur.
Les figures 2 et 3 illustrent un insert taraudé en semi-coupe longitudinale respectivement avant et après déformation de la zone fusible.
La figure 4 illustre une vue en coupe d'un autre type d'insert taraudé avant déformation de la zone fusible.
La figure 5 illustre une vue en semi-coupe longitudinale de l'insert de la figure 4 après déformation de la zone fusible.
La figure 6 illustre un insert selon la figure 5 serti à un support.
La figure 7 illustre le surmoulage de l'insert selon la figure 3.

### Description de modes préférentiels de réalisation

L'insert décrit ci-après diffère des inserts de l'art antérieur en ce que le tronçon de dégagement de taraud forme une zone fusible plus ductile permettant de compacter l'insert sans endommager le tronçon fileté tout en assurant l'étanchéité du fût.

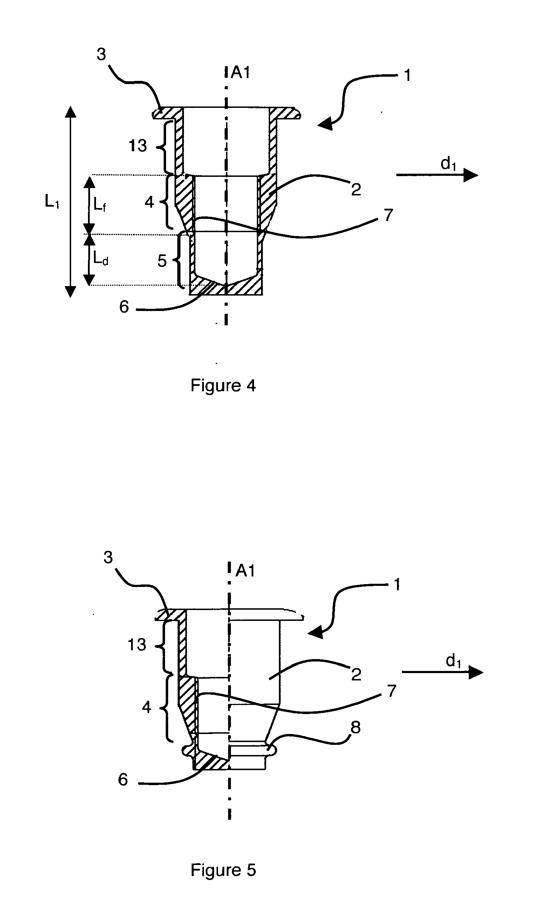

Comme illustré aux figures 2 à 5, l'insert 1 monobloc comporte un fût borgne 2, de préférence en forme de tube selon un axe de révolution matérialisant la direction axiale A1 selon laquelle est orientée la longueur axiale de l'insert repérée L₁ sur les figures 2 et 4. Par borgne, on entend que le conduit intérieur du fût ne débouche qu'à une de ses extrémités axiales. Par monobloc, on entend que l'insert est fabriqué ou moulé d'une unique pièce, sans par exemple report d'un fond comme dans l'art antérieur.

L'insert 1 comporte en outre une collerette 3 délimitant une tête de l'insert 1 au niveau d'une extrémité axiale ouverte du fût 2. La collerette 3 s'étend vers l'extérieur du fût 2, de préférence l'insert comporte une unique tête. Par extrémité axiale, on entend une extrémité selon l'axe A1 précédemment défini. Un tronçon axial du fût 2 est fileté 7 intérieurement au fût 2 par taraudage, délimitant ainsi intérieurement au fût 2 un tronçon de dégagement de taraud 5 entre le tronçon fileté 4 et le fond 6 du fût 2. Autrement dit, l'extrémité axiale du fût 2 opposée à la collerette 3 comporte un fond 6 le rendant borgne. Le tronçon de dégagement de taraud 5 comporte une zone fusible configurée pour se déformer sous un effort axial (de préférence selon A1) prédéterminé de compression appliqué à l'insert, par exemple à l'extrémité du fût 2 opposée à la tête, sans provoquer de déformation dudit tronçon fileté 4. Le tronçon fileté 4 et le tronçon de dégagement de taraud 5 sont, de préférence, coaxiaux.

Le filetage 7 du tronçon fileté 4, obtenu par taraudage, est destiné à coopérer avec un organe de vissage (non représenté) du type vis ou boulon. C'est pourquoi le filetage 7 ne doit pas être détérioré lors de la déformation du tronçon de dégagement de taraud 5 sous peine de ne plus pouvoir y visser l'organe de vissage.

Le tronçon de dégagement de taraud 5 est une partie de l'insert 1 nécessaire pour réaliser le filetage au niveau du tronçon 4 d'un insert borgne dont le fond 6 fait partie intégrante de l'insert. En effet, lors d'un taraudage dans un trou borgne, le taraud peut comporter un cône d'entrée dont la longueur peut atteindre plusieurs multiples du pas du diamètre à tarauder. Ainsi, il est possible que la longueur axiale L_{f} du tronçon fileté 4 soit inférieure ou égale à la longueur axiale L_{d} du tronçon de dégagement de taraud 5. Les longueurs axiales correspondent aux dimensions orientées selon l'axe A1. L'insert obtenu peut alors avoir une longueur axiale L₁ excessive par rapport à la longueur effective utile de l'insert qui peut se traduire par la collerette 3, le tronçon fileté 4 et le fond 6 de l'insert à fût 2 borgne. Le fond 6 rendant le fût 2 de l'insert borgne est situé à une extrémité axiale de l'insert opposée à la collerette 3. Le tronçon de dégagement de taraud 5 peut présenter un profil conique non débouchant au niveau du fond 6 du fût 2. Ce profil conique a une forme sensiblement complémentaire au taraud utilisé pour former le filetage. Sur les figures, la section de l'insert a une forme de V au niveau du fond 6 de l'insert 1. De préférence, la zone fusible est réalisée sur toute la longueur du tronçon de dégagement 5 de sorte à améliorer la compacité de l'insert après déformation.

Dans l'exemple illustré aux figures 2 et 4, le tronçon de dégagement de taraud 5 est en partie délimité par le fond 6 du fût 2. Le tronçon fileté 4 est intercalé entre la collerette 3 et le tronçon de dégagement de taraud 5.

Ainsi, la zone fusible permet la déformation de l'insert 1 sur sa partie arrière, c'est-à-dire opposée à la collerette 3, au niveau du tronçon de dégagement de taraud 5. Cette déformation peut être réalisée par exemple par sertissage ou emboutissage arrière de sorte à former un bourrelet 8 comme illustré aux figures 3 et 5. Le bourrelet 8 est composé de la matière du fût 2 au niveau du tronçon de dégagement de taraud et permet d'obtenir un insert 1 plus court et compact en réduisant considérablement la longueur du tronçon de dégagement de taraud tout en assurant l'étanchéité du fût 2 au niveau de sa partie arrière opposée à la collerette 3.

De plus, le bourrelet 8 constitue une forme de retenue particulièrement avantageuse lors d'un surmoulage de l'insert. En effet, le bourrelet 8 s'étend perpendiculairement au fût 2 dans une direction extérieure au fût 2 de sorte à délimiter une saillie au niveau de la surface extérieure du fût 2, et former ainsi des moyens de blocage de l'insert en traction selon son axe A1 après son surmoulage.

De préférence, l'épaisseur du fût 2 est plus faible au niveau de la zone fusible du tronçon de dégagement de taraud 5 qu'au niveau du tronçon fileté 4. Par épaisseur du fût 2 on entend l'épaisseur de la paroi du fût 2 orientée selon la direction d₁ de révolution sensiblement perpendiculaire autour de l'axe longitudinal A1 de l'insert. Ainsi, lors d'une compression du fût 2, de préférence selon l'axe A1, ce dernier se déformera tout d'abord au niveau de la zone fusible du tronçon de dégagement de taraud 5 sans endommager l'intégrité du filetage 7. De préférence, selon l'axe A1 de l'insert 1, la zone fusible du tronçon de dégagement de taraud 5 est la partie de l'insert 1 dont l'épaisseur est la plus faible, ainsi la seule déformation possible de l'insert 1, pour une force prédéterminée exercée selon l'axe A1, est celle de la zone fusible.

De préférence, l'insert est une pièce monobloc formée par frappe à froid, ainsi il ne présente pas de problèmes d'étanchéité et sa fabrication comporte moins d'étapes puisqu'une seule pièce est usinée. La frappe à froid permet de conformer l'insert 1 de sorte à prévoir à la suite d'un tronçon fileté 4, un tronçon de dégagement de taraud 5, de préférence à profil conique, afin de permettre l'insertion dans le fût 2 d'un taraud pour réaliser le filetage du tronçon fileté.

Le procédé de fabrication et de déformation de l'insert comporte après formation du fût 2 borgne et de la collerette 3, une étape de taraudage du fût 2 de l'insert 1 par un taraud, suivie d'une étape d'emboutissage de l'insert 1 sur son extrémité opposée à la collerette 3, de préférence lors du retrait du taraud, de sorte à former un bourrelet 8 en saillie de la surface extérieure du fût 2 au niveau du tronçon de dégagement de taraud 5. La force exercée lors de l'emboutissage est telle que le tronçon fileté n'est pas endommagé. La force exercée est alors, de préférence, parallèle à l'axe longitudinal du fût. Avantageusement, après recul du taraud, une commande de recul dudit taraud déclenche l'avancé d'un piston venant en contact avec l'extrémité du fût opposée à la collerette et exerçant sur cette dernière une force de compression de sorte à déformer la zone fusible, de préférence avant retrait total du taraud. Il est aussi possible de comprimer l'insert après taraudage en utilisant par exemple une enclume reportée sur la collerette et un piston venant prendre appui sur l'extrémité de l'insert opposée à la collerette 3. Avant l'étape de taraudage, la forme générale de l'insert 1 peut être obtenue par une étape de frappe à froid d'une plaque, par exemple métallique.

Selon un développement illustré aux figures 2 et 3, l'insert 2 comporte des moyens pour le bloquer en rotation autour de son axe longitudinal A1 (donc aussi l'axe du fût 2) après surmoulage. Ces moyens pour bloquer en rotation l'insert après surmoulage peuvent être formés par la surface extérieure du fût 2, sur au moins une partie de la longueur axiale dudit fût 2. Selon l'exemple particulier des figures 2 et 3, la surface extérieure du fût 2 au niveau des moyens de blocage en rotation est délimitée par un cylindre dont une courbe directrice présente une forme polygonale. Par définition, un cylindre est une surface de l'espace définie par une droite appelée génératrice, passant par un point variable décrivant une courbe plane fermée appelée courbe directrice, et conservant une direction fixe. Bien entendu, l'homme du métier sera à même de modifier autrement la surface extérieure de l'insert 1 de sorte à éviter sa rotation après surmoulage.

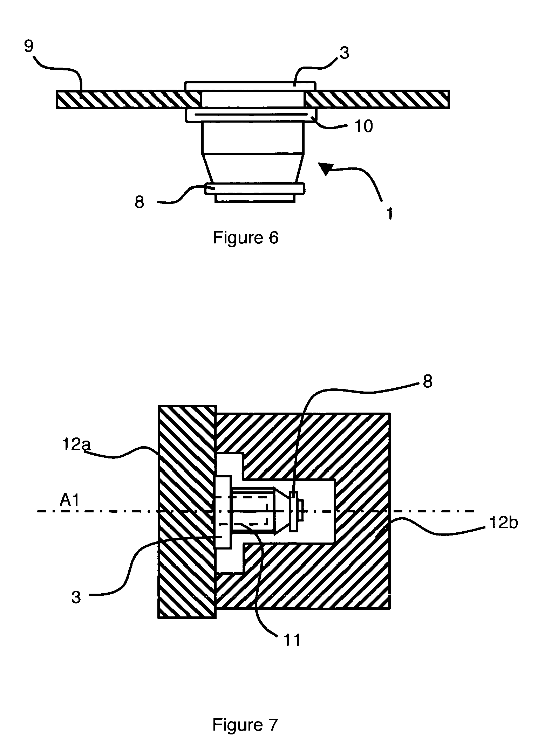

Selon un autre développement des figures 4 et 5, l'insert comporte en outre un alésage 13 situé entre la collerette 3 et le tronçon fileté 4. L'alésage 13 présente un diamètre intérieur supérieur au diamètre interne du tronçon fileté 4. Un tel alésage 13 permet l'utilisation de l'insert par sertissage. Ainsi, le tronçon associé à l'alésage forme aussi une zone fusible mais dont la résistance à la déformation est, de préférence, supérieure à la force nécessaire pour déformer la zone fusible du tronçon de dégagement de taraud. La zone fusible est avantageusement située entre la collerette 3 et le tronçon fileté 4. La figure 6 illustre un insert 1 selon les figures 4 et 5 serti à un support 9 entre la collerette 3 et une protubérance 10 extérieure au fût 2 formée par la déformation de l'alésage 13. Le fait que l'insert soit borgne évitera à des particules de pénétrer par sa partie arrière.

Avantageusement, l'insert sera utilisé dans le cadre de surmoulage. Le fait qu'il soit borgne évitera à la matière du surmoulage de pénétrer dans le fût à l'extrémité opposée de la collerette 3 lors de l'étape de moulage. Le bourrelet 8 servira de moyens de blocage en traction de l'insert et l'insert pourra comporter les moyens de blocage en rotation décrits précédemment. La figure 7 illustre l'utilisation d'un insert selon la figure 3. L'insert 1 est tout d'abord reporté par son ouverture sur un téton 11 de fixation prévu à la surface d'une première empreinte de moule 12a jusqu'à ce que la collerette 3 vienne en contact avec la surface de la première empreinte. Puis une seconde empreinte de moule 12b, de préférence mobile, est reportée sur l'insert de sorte à fermer le moule. Ainsi, un matériau peut être coulé dans le moule de sorte à former le surmoulage autour de l'insert, le bourrelet 8 obtenant alors sa fonction de blocage en traction selon l'axe longitudinal A1 après surmoulage.

## Revendications

1. Insert monobloc comprenant:
- un fût borgne (2),
- une collerette (3) délimitant une tête de l'insert au niveau d'une extrémité axiale ouverte du fût (2),
- un tronçon fileté (4) intérieurement au fût par taraudage,
- un tronçon de dégagement de taraud (5) agencé entre le tronçon fileté (4) et le fond (6) du fût (2)
**caractérisé en ce que** le tronçon de dégagement de taraud (5) comporte une zone fusible configurée pour se déformer sous un effort axial prédéterminé de compression appliqué à l'insert sans provoquer de déformation dudit tronçon fileté (4).

2. Insert selon la revendication 1, **caractérisé en ce que** le tronçon de dégagement de taraud (5) présente un profil conique non-débouchant au niveau du fond (6) du fût (2).

3. Insert l'une des revendications 1 ou 2, **caractérisé en ce que** l'épaisseur du fût (2) est plus faible au niveau de la zone fusible du tronçon de dégagement de taraud (5) qu'au niveau du tronçon fileté (4).

4. **I**nsert selon l'une quelconque des revendications 1 à 3 **caractérisé en ce que** la longueur axiale du tronçon fileté (4) est inférieure ou égale à la longueur axiale du tronçon de dégagement de taraud (5).

5. Insert selon l'une quelconque des revendications 1 à 4, **caractérisé en ce qu'**il comporte des moyens pour bloquer sa rotation autour d'un axe longitudinal (A1) du fût (2) après surmoulage.

6. lnsert selon la revendication 5, **caractérisé en ce que** les moyens pour bloquer la rotation après surmoulage sont formés par la surface extérieure du fût (2), sur au moins une partie de la longueur axiale dudit fût (2).

7. Insert selon la revendication 6, **caractérisé en ce que** la surface extérieure du fût (2) au niveau des moyens de blocage en rotation est délimitée par un cylindre dont une courbe directrice présente une forme polygonale.

8. Procédé de fabrication et de déformation d'un insert selon la revendication 1, **caractérisé en ce qu'**il comporte, après formation du fût borgne (2) et de la collerette (3), une étape de taraudage du fût (2) de l'insert (1) par un taraud, suivie d'une étape d'emboutissage de l'insert (1) sur son extrémité opposée à la collerette (3) de sorte à former un bourrelet (8) en saillie de la surface extérieure du fût (2) au niveau du tronçon de dégagement de taraud (5).
